# EUROPÄISCHE PATENTSCHRIFT

(11) **EP 3 037 591 B1**
(45) Veröffentlichungstag und Bekanntmachung des Hinweises auf die Patenterteilung: **23.08.2017**
(21) Anmeldenummer: 16151883.2
(22) Anmeldetag: 14.09.2011
(51) Int. Cl.: E03B 7/04, E03B 7/07, E03C 1/044, C02F 1/00, F16K 31/00, G05D 23/00

(54) **TRINK- ODER BRAUCHWASSERSYSTEM**
DRINKING OR DOMESTIC WATER SYSTEM
SYSTEME DE BOISSON OU D'EAU SANITAIRE

(30) Priorität: 10.02.2011 DE 102011010840
(43) Veröffentlichungstag der Anmeldung: 29.06.2016
(62) Teilanmeldung aus: 11007453.1
(73) Patentinhaber: Oventrop GmbH & Co. KG, 59939 Olsberg (DE)
(72) Erfinder: Coerdt, Martin, 59939 Olsberg (DE); Foitzik, Roland, 59939 Olsberg (DE)
(74) Vertreter: Köchling, Conrad-Joachim

(56) Entgegenhaltungen:
- EP-A1- 0 936 524
- DE-A1- 1 550 412
- GB-A- 2 261 464
- JP-A- H04 100 588
- US-A- 1 960 782
- US-A1- 2009 314 844

## Beschreibung

Gegenstand der Erfindung ist ein temperaturgesteuertes Ventil zum Einsatz in Kaltwassertrink- oder Kaltbrauchwasser-Systemen gemäß Oberbegriff des Anspruches 1.

Folgt man der Tatsache, dass Trinkwasser wie ein Lebensmittel zu behandeln ist, muss sichergestellt werden, dass die Temperatur des Trinkwassers in den Leitungen immer in einem hygienisch günstigen Temperaturbereich unter 9 ° C. vorliegt, um eine Kontamination mit Bakterien zu vermeiden. Um dies sicherzustellen, muss das Trinkwasser, wie dies von Warmwassersystemen bekannt ist, in den Leitungen regelmäßig ausgetauscht werden, was durch eine Zirkulation oder eine Spülung des Systems erfolgen kann.

Aus der EP 2 098 647 ist eine Anschlussarmatur für die Anbindung von Ringleitungen an Steig- oder Etagenstränge bekannt, die einen zuverlässigen Durchspülungseffekt der Ringleitung sicherstellen soll. Bei der Verwendung dieser Anschlussarmatur werden die Ringleitungen bei der Spülung oder Zirkulation durchspült, unabhängig davon, ob in der Leitung eine erhöhte Trinkwassertemperatur vorliegt oder nicht. Die Durchspülung erfolgt aufgrund unterschiedlicher Strömungswiderstände in der Ringleitung und der Anschlussarmatur. Dies führt bei einer Spülung zu einer unnötig hohen Abgabe von Wasser an das Abwassersystem. Ein weiterer Nachteil ist, dass sich das gespülte Wasser aus den vorliegenden Ringleitungen mit dem frischen Wasser vermischt und die nachfolgenden Ringleitungen durchströmt, was einen schnellen, vollständigen Wasseraustausch verhindert. Weil die Leitungsstränge und/oder Ringleitungen in der Regel unterschiedliche Längen aufweisen, werden ungünstige Stränge und/oder Ringleitungen nur schlecht durchspült.

Aus der DE 100 56 715 A1 und der DE 10 2005 038 699 B4 sind temperaturweggebergesteuerte Ventile für den Einsatz in Warmwassersystemen bekannt, welche oberhalb einer einstellbaren Wassertemperatur einen Restvolumenstrom zulassen und bei Unterschreitung der eingestellten Temperatur den Volumenstrom über das Ventil erhöhen, um den betreffenden Strang oder der betreffenden Ringleitung Wasser mit ausreichender Temperatur zuzuführen.

Gattungsgemäße Ventile sind aus der DE 15 50 412 A1, der US 2009/314 844 A1 und der EP 0 936 524 A1 bekannt.

Ausgehend von diesem Stand der Technik liegt der Erfindung die Aufgabe zugrunde, ein temperaturgesteuertes Ventil, insbesondere ein durch einen Temperaturweggeber gesteuertes Ventil zu schaffen, welches bei Kaltwassersystemen einsetzbar ist und welches in einem Zirkulations- oder Spülsystem von Kaltwasser den Volumenstrom so einstellt, dass das kalte Trinkwasser oder Brauchwasser mit einer bestimmten Temperatur durch die Leitungen fließt.

Zur Lösung dieser Aufgabe schlägt die Erfindung vor, dass das Ventil (101) ein den Durchfluss bestimmendes Regelstück (112) aufweist, welches durch ein die Temperatur des durchströmenden Mediums erfassendes Stellglied unmittelbar oder über einen damit gekoppelten Antrieb in die beiden Extremlagen steuerbar oder einstellbar ist,
- dass das Stellglied ein im durchströmenden Medium angeordnetes Thermoelement (111) mit Ausdehnungselement nach Art eines Stößels ist,
- dass das Ventil (101) ein Gehäuse (102) mit einem Einlass (103) und einem Auslass (104) für das durchströmende Medium aufweist, oder
- dass das Ventil (101) im Gehäuse einer Anschlussarmatur (119) mit Einlassanschluss (120) und Auslassanschluss (123) aufgenommen ist, mit der eine Ringleitung an eine Hauptversorgungsleitung angeschlossen ist,
- dass das Ventil (101) in eine von einer Hauptversorgungsleitung abgezweigte Ringleitung eingebaut ist und dass das Ventil (101) mit einem Regelelement derart gekoppelt ist, dass bei für maximalen Volumenstrom geöffnetem Ventil die Hauptversorgungsleitung derart abgesperrt ist, dass der Volumenstrom der Hauptversorgungsleitung die Ringleitung durchströmt, wobei nach Erreichen der Solltemperatur das Ventil (101) wieder auf einen Restdurchfluss reduziert und die Hauptversorgungsleitung wieder freigegeben ist und
- dass das Ventil (101) ein Gehäuse mit einem Fluid-Einlass (103) und einem Fluid-Auslass (104) sowie eine mit diesen in Verbindung stehenden Kammer (125) aufweist, in die ein Ventileinsatz (105) eingesetzt ist, der mit dem Einlass (103) und dem Auslass (104) in Verbindung steht, wobei der Ventileinsatz (105) eine Hülse (106) aufweist, in der eine von außen bedienbare Hauptspindel (107) gehalten ist und die eine Bodenöffnung (115) aufweist, die zum Einlass (103) offen ist, sowie radiale Öffnungen (126) die zum Auslass (104) offen sind, wobei zwischen dem innenliegenden Ende der Hauptspindel (107) und dem die Bodenöffnung (115) aufweisenden Boden der Hülse (106) ein Federelement (113) angeordnet ist, das sich am Boden abstützt und an einem unter Temperatureinwirkung sich parallel zur Spindelachse ausdehnenden Thermoelement (111), das sich am innenliegenden Spindelende abstützt, wobei das Thermoelement (111) mit einem Regelstück (112) zwangsgekoppelt ist, welches mit seiner Außenumfangskontur (128) und einer im Inneren der Hülse (106) ausgebildeten Kontur (127) einen Strömungsspalt (114) bildet, über den das einströmende Fluid zu den radialen Öffnungen (126) der Hülse (106) und folgend zum Auslass (104) strömt.

Eine einfache Lösung ist die, dass bei dem entsprechenden Ventil die Temperatur fest eingestellt ist, bei der der entsprechende Schaltvorgang des Ventiles erfolgen soll.

Vorzugsweise ist allerdings vorgesehen, dass die gewünschte Temperatur am Ventil einstellbar ist. Durch das temperaturgesteuerte Ventil, insbesondere durch das mit einem Temperaturweggeber gesteuerte Ventil ist es möglich, den Volumenstrom des durchfließenden Mediums so einzustellen, dass das Trinkwasser oder Brauchwasser mit der am Ventil eingestellten Temperatur durch die entsprechenden Leitungen fließt. Insbesondere wird sichergestellt, dass das in Kaltwassertrink- oder Kaltbrauchwasser-Systemen eingesetzte Ventil unterhalb einer eingestellten oder einstellbaren Mediumtemperatur beispielsweise unterhalb 9 ° C nur einen Restvolumenstrom zulässt, der zur Temperatursteuerung des Ventiles dient und oberhalb der einstellbaren Temperatur, also bei unzulässig höheren Temperaturen, den Volumenstrom vergrößert, um ein Durchspülen und einen Abtransport des unzulässig erwärmten Wassers sicherzustellen. Die Regelung kann dabei thermisch durch ein im Volumenstrom liegendes Thermoelement beispielsweise gekoppelt mit einem Temperaturweggeber erfolgen oder auch durch ein Regelelement, welches durch eine von der Mediumtemperatur abhängig geregelte Fremdenergie gesteuert wird.

Ebenso ist vorzugsweise vorgesehen, dass die Höhe des Restvolumenstromes, den das Ventil unterhalb von beispielsweise 9 ° C durchlässt, einstellbar ist. Dadurch kann die für den jeweiligen Strang erforderliche Kühlenergie für jeden Strang individuell angepasst werden.

Die für die Steuerung des Ventils vorgesehene Regeleinheit kann in einem eigenständigen Gehäuse oder auch in einer Anschlussarmatur vorgesehen sein, mit der eine Ringleitung an eine Hauptversorgungsleitung angebunden werden kann. Die Regeleinheit kann auch so ausgeführt werden, dass bei einer Überschreitung der Solltemperatur das integrierte Thermoelement mittels des entsprechenden Temperaturweggebers einen höheren Durchfluss freigibt und gleichzeitig der Hauptstrang des Systems abgesperrt wird, so dass der Volumenstrom des Hauptstranges die Ringleitung durchströmt, in welcher das temperaturgesteuerte Ventil angeordnet ist. Wird dann die Solltemperatur erreicht, kann der Durchfluss durch das temperaturgesteuerte Ventil wieder auf einen Restdurchfluss reduziert werden und der Hauptstrang des Systems freigegeben werden.

Die Erfindung betrifft ferner ein Trink- oder Brauchwassersystem mit temperaturgesteuerten Ventilen nach Anspruch 1 und mit einem Leitungssystem, das einen Anschluss an ein öffentliches Wasserversorgungsnetz aufweist, sowie mindestens einen Vorlaufstrang oder Steigstrang mit mindestens einem davon abzweigenden Stockwerksstrang und/oder mindestens einer in Durchströmrichtung des Wassers vom Steigstrang und/oder vom Stockwerksstrang abgezweigten Ringleitung, sowie mindestens einem am Steigstrang und/oder am Stockwerksstrang und/oder in der Ringleitung angeschlossenen Verbraucher sowie einem Rücklaufstrang, in den der Vorlaufsstrang und/oder der Steigstrang und/oder der Stockwerksstrang und/oder die Ringleitung mündet.

Insbesondere betrifft die Erfindung ein System, indem kaltes Trink- oder Brauchwasser bereitgestellt wird. Wie in Systemen für warmes Trink- und Brauchwasser kann es auch in Systemen mit kalten Wasser zu einem Wachstum von Keimen, wie Pseudomonas aeruginosa (nachfolgend als Pseudomonaden bezeichnet) oder Legionellen kommen, wenn sich die Wassertemperatur in dem für das Wachstum günstigen Bereich zwischen 9 ° und 42 ° C. befindet. Es wird hierzu auf die Literaturstelle "Mikrobiologisch-hygienische Aspekte des Vorkommens von Pseudomonas aeruginosa im Trinkwasser, Energie/Wasser-Praxis 3, 2009" verwiesen.

Bei Systemen, die beispielsweise wie in der EP 1 845 207 A1 beschrieben, als Ringleitungen ausgeführt sind, muss für das Erreichen einer einwandfreien Trinkwasserqualität sowie zur Verhinderung einer Erwärmung des Kaltwassers auf unzulässige hohe Temperaturen, die Anlage regelmäßig gespült werden. Hierdurch steigt der Wasserverbrauch stark an und ebenso die damit verbundenen Betriebskosten. Betrachtet man das Trinkwasser wie ein Lebensmittel, sollte das Wasser auf eine Temperatur von unter 9 ° C. gehalten werden. Es wird hierzu auf die oben genannte Literaturstelle verwiesen.

Gerade im Hochsommer kann es vorkommen, dass das von den Wasserversorgern gelieferte Frischwasser diese Temperatur bereits deutlich übersteigt. Es wird hierzu auf die Literaturstelle "Legionellenvermehrung in Kaltwasserleitungen, Arbeitskreistrinkwasserinstallation und Hygiene, RAS 06/ 2010" verwiesen. Selbst durch dauerhaftes Spülen der Leitungen ist somit eine Gefahr der Verkeimung nicht auszuschließen.

Aus der EP 1 845 207 A1 ist ein entsprechendes System bekannt, bei dem bei Einleitung der Spülung alle Ringleitungen gleichzeitig gespült werden. Dabei wird ein Ventil eingesetzt, mit dem eine gleichmäßige Spülung aller Ringleitungen ermöglicht wird. Die Spülung erfolgt in regelmäßigen Zeit-Abständen, wobei es unerheblich ist, ob in den Ringleitungen eine erhöhte Wassertemperatur vorliegt oder nicht. Das heißt, es erfolgt bei jeder Spülung ein kompletter, jedoch unkontrollierter Austausch des Wassers in der gesamten Anlage.

Ausgehend von diesem Stand der Technik liegt der Erfindung die weitere Aufgabe zugrunde, ein Trink- oder Brauchwassersystem gattungsgemäßer Art zu schaffen, mit dem unter Vermeidung von hohem Wasserverbrauch und damit verbundenen Betriebskosten sichergestellt werden kann, dass das im System befindliche Wasser hygienischen Bedingungen genügt, also keine unzulässig hohen Konzentrationen von Keimen, insbesondere von Pseudomonaden, entstehen.

Hier schlägt die Erfindung ein System vor, wobei das Leitungssystem aus Vorlaufstrang oder Steigstrang und Rücklaufstrang einen geschlossenen Zirkulationsstrang bildet, und dass in diesen Zirkulationsstrang eine Einrichtung zur Kühlung des durchströmenden Wassers integriert ist, mittels derer das Trink- oder Brauchwasser auf eine vorbestimmte Temperatur kühlbar ist oder gekühlt wird.

Durch diese Ausbildung wird erreicht, dass das in dem Leitungssystem befindliche Wasser vornehmlich gezielt in den entsprechenden Leitungen zirkulieren kann, wobei die Temperatur des im System durchströmenden Wassers auf eine vorbestimmte Temperatur gekühlt wird, also vorzugsweise unter 9 ° C., wodurch sichergestellt ist, dass das Wachstum von Keimen, insbesondere Pseudomonaden, unterdrückt wird. Dabei ist kein zusätzlicher Wasserbedarf erforderlich, da das Wasser in dem System zirkulieren kann und lediglich bestimmungsgemäß an den Verbrauchern abgezapft werden kann. Das zirkulierende Wasser wird dabei durch eine Einrichtung zur Kühlung geleitet, beispielsweise ein Kühlaggregat, welches das Wasser auf eine hygienisch vorteilhafte Temperatur, vorzugsweise unter 9 ° C., herunterkühlt. Anstelle einer direkten Durchleitung durch ein Kühlaggregat kann das Kühlen des Wassers auch durch einen Kaltwasserspeicher erfolgen, welcher durch ein Kühlaggregat beschickt wird.

Um eine ausreichende Durchströmung aller Anlagenteile zu erreichen und die hydraulische Einregulierung temperaturabhängig zu gestalten, um damit bevorzugt eine Kaltwassertemperatur von 9 ° C aufrecht zu erhalten, wird vorgeschlagen, dass in eine oder jede Ringleitung mit wenigstens einem Verbraucher ein geregeltes Strangregulierventil eingeschaltet ist, welches in Abhängigkeit von einer einstellbaren Temperatur bei oberhalb eines Sollwertes liegender Temperatur des die Ringleitung durchströmenden Wassers den Durchfluss bis zu einem maximalen Wert öffnet und bei darunter liegender Temperatur den Durchfluss auf einen minimalen Wert begrenzt, wobei das Strangregulierventil vorzugsweise innerhalb der Ringleitung deren in Strömungsrichtung letztem Verbraucher nachgeschaltet ist oder in eine Einbindearmatur zwischen Ringleitung und Hauptleitung des Leitungssystems integriert ist.

Hierbei wird also zum Erreichen einer gezielten Zirkulation vorgeschlagen, die Ringleitungen mit einem geregelten Strangregulierventil zu kombinieren, welches unterhalb der am Ventil eingestellten Temperatur nur einen Restvolumenstrom durch das Ventil zulässt. Wird die am Ventil eingestellte Temperatur überschritten, so wird dies durch den Temperaturfühler des Ventils erfasst und das Ventil geöffnet, so dass die Ringleitung voll durchströmt wird. Bei Erreichen der Zieltemperatur, also beispielsweise 9 ° C., wird der Durchgang durch das Ventil wieder auf einen Restvolumenstrom begrenzt, weil der Temperaturfühler des Ventiles das Ventil in eine Stellung einstellt, in der nur ein Restvolumenstrom durch das Ventil fließt.

Dieser Restvolumenstrom ist notwendig, um eine ständige Umspülung des Temperaturfühlers im Ventil zu gewährleisten und damit eine ständige Erfassung der aktuellen Temperatur im jeweiligen Ring oder Strang zu erzielen. Durch das temperaturabhängige Öffnen des Ventils auf vollen Durchlass werden die einzelnen Abschnitte nur so lange voll durchströmt, bis die Zieltemperatur erreicht ist beziehungsweise nur dann, wenn die Zieltemperatur überschritten ist.

Aus dem gleichen Grunde sieht die Erfindung vor, dass mindestens in einen oder jeden Stockwerksstrang mit mindestens einem Verbraucher ein geregeltes Strangregulierventil eingeschaltet ist, welches in Abhängigkeit von einer einstellbaren Temperatur bei oberhalb eines Sollwertes liegender Temperatur des den Strang durchströmenden Wassers den Durchfluss bis zu einem maximalen Wert öffnet und bei darunter liegender Temperatur den Durchfluss auf einen minimalen Wert begrenzt, wobei das Strangregulierventil vorzugsweise in dem Stockwerksstrang dem darin integrierten in Strömungsrichtung des Wassers letzten Verbraucher nachgeschaltet ist oder in eine Einbindearmatur zwischen Stockwerksstrang und Hauptleitung des Leitungssystems integriert ist.

Ebenso aus dem gleichen Grunde sieht die Erfindung vor, dass mindestens in einen Steigstrang mit mindestens einem Verbraucher ein geregeltes Strangregulierventil eingeschaltet ist, welches in Abhängigkeit von einer einstellbaren Temperatur bei oberhalb eines Sollwertes liegender Temperatur des den Strang durchströmenden Wasser den Durchfluss bis zu einem maximalen Wert öffnet und bei darunter liegender Temperatur den Durchfluss auf einen minimalen Wert begrenzt, wobei das Strangregulierventil vorzugsweise dem in Strömungsrichtung letzten Verbraucher nachgeschaltet ist.

Unter Umständen kann dabei vorgesehen sein, dass der Anschluss an das Wasserversorgungsnetz zwischen den Ausgang der Kühleinrichtung und den Vorlauf- oder Steigstrang geschaltet ist.

Bei dieser Lösung wird davon ausgegangen, dass das Wasserversorgungsnetz das zugeführte Wasser mit ausreichend niedriger Temperatur zur Verfügung gestellt. In diesem Falle kann der Anschluss an das Wasserversorgungsnetz zwischen den Ausgang der Kühleinrichtung und den Vorlauf- oder Steigstrang geschaltet sein.

Insbesondere im Sommer, also bei hohen Außentemperaturen ist nicht immer sichergestellt, dass das Wasser aus dem Wasserversorgungsnetz ausreichend niedrige Temperatur aufweist.

Aus diesem Grunde ist bevorzugt vorgesehen, dass der Anschluss an das Wasserversorgungsnetz in Strömungsrichtung vor den Eingang der Kühleinrichtung in die Ringleitung eingeschaltet ist.

Hierbei erfolgt die Zuleitung von Frischwasser aus dem Netz des Wasserversorgers bereits vor der Kühlung durch das Kühlaggregat oder den Kaltwasserspeicher. Somit wird auch bei hohen Außentemperaturen, wie zum Beispiel im Hochsommer, das aus dem Netz des Wasserversorgers zugeführte Frischwasser auf hygienisch vorteilhafte Temperatur gesenkt.

Um eine gleichmäßige Durchströmung aller Leitungssysteme zu erzielen, ist ein hydraulischer Abgleich der einzelnen Stränge untereinander erforderlich. Dies kann mit statischen Strangregulierventilen erfolgen, jedoch mit dem Nachteil, dass sich bei längerer Wasserentnahme in einigen Anlageteilen mangelhaft durchströmte andere Anlagenteile unzulässig erwärmen können.

Insbesondere ist vorgesehen, dass das Strangregulierventil durch einen Temperaturmessfühler oder ein Temperatur erfassendes Stellglied gesteuert ist, welcher oder welches im Strömungsweg des Wassers durch das Strangregulierventil angeordnet ist.

In der normalen Betriebsweise sind die geregelten Strangregulierventile nicht alle gleichzeitig geöffnet, so dass der volle Druck des Zirkulationssystems für die Durchströmung des betreffenden Abschnittes zur Verfügung steht und somit ein zügiger Wasseraustausch in dem betreffenden Abschnitt erfolgen kann.

Zudem kann bevorzugt vorgesehen sein, dass zwischen den Anschluss an das öffentliche Wasserversorgungsnetz und das Leitungssystem ein Filter zur Herausfilterung von Keimen installiert ist.

Durch ein solches Filtersystem wird das aus dem Trinkwassernetz zufließende Frischwasser geleitet und eventuell vorhandene Keime, wie zum Beispiel Pseudomonaden oder Legionellen werden aus dem Wasser herausgefiltert.

Um eine ausreichende Zirkulation in dem System sicherzustellen, ist zudem vorgesehen, dass in dem Zirkulationssystem eine Zirkulationspumpe installiert ist.

Mit der erfindungsgemäßen Ausgestaltung werden wesentliche Vorteile erreicht. Beispielsweise wird eine unzulässige Erwärmung des im System durchströmenden Trinkwassers vermieden, wenn solche Leitungen für Trinkwasser parallel zu Versorgungsleitungen in Kanälen und Schächten verlegt sind und die Versorgungsleitungen höhere Temperaturen aufweisen oder von Medien durchströmt sind, die höhere Temperatur aufweisen.

Das Trinkwasser der Wasserversorgungsunternehmen kann dann, wenn es zu hohe Eingangstemperatur aufweist, in dem System auf eine Temperatur gekühlt werden, die ein Wachstum von Pseudomonaden oder anderen Verkeimungsarten unterbindet, wobei vorzugsweise der Anschluss für das zugeführte Frischwasser vor dem Eingang der Kühleinrichtung geschaltet ist.

Mit dem eingangsseitig des Systems installierten Filtersystem lassen sich Pseudomonaden und Legionellen zuverlässig abfiltern. In Verbindung mit der erfindungsgemäßen Kaltwasserzirkulationsanlage kann die Trinkwassertemperatur so bestimmt werden, dass behördliche Vorgaben, zum Beispiel für Krankenhäuser oder dergleichen, sicher eingehalten werden.

Bevorzugt ist vorgesehen, dass das Ventil ein Zirkulationsventil ist.

Ferner ist bevorzugt vorgesehen, dass das Ventil ein Strangregulierventil ist.

Auch ist bevorzugt vorgesehen, dass das Federelement eine Schraubenfeder ist.

Ausführungsbeispiele der Erfindung sind in Zeichnungsfiguren dargestellt und im Folgenden näher beschrieben. Es zeigt:
- Figur 1: ein Zirkulationskühlsystem mit Kälteerzeuger und geregelten Strangregulierventilen in Ringleitungen;
- Figur 2, 2A: ein Zirkulationskühlsystem mit Kälteerzeuger und geregelten Strangregulierventilen in Stockwerkssträngen;
- Figur 3, 3A: ein Zirkulationskühlsystem mit Kälteerzeuger mit geregelten Strangregulierventilen in den Steigsträngen;
- Figur 4: eine Schnittdarstellung eines Ventiles mit Ventileinsatz, wobei das Ventil in der Stellung "Restdurchfluss" ist und die eingestellte Temperatur der Mediumtemperatur entspricht;
- Figur 5: ein Detail X der Figur 4 in vergrößertem Maßstab;
- Figur 6: eine Schnittdarstellung des Ventils mit Ventilgehäuse und Ventileinsatz bei geöffnetem Ventil, wenn die Mediumtemperatur größer als die eingestellte Temperatur ist;
- Figur 7: das Detail Y der Figur 6 in vergrößerter Ansicht;
- Figur 8: eine Schnittdarstellung des Ventils mit Ventileinsatz bei geschlossenem Ventil;
- Figur 9: das Detail Z der Figur 8 in vergrößerter Detailansicht;
- Figur 10: eine Draufsicht auf ein Entsprechendes Ventil bei demontiertem Handrad zur Einstellung der Öffnungstemperatur;
- Figur 11: ein entsprechendes Ventil mit demontiertem Handrad zur Einstellung der Öffnungstemperatur in einer isometrischen Ansicht;
- Figur 12: eine Kombination eines Ventiles Mit einer Anschlussarmatur in Ansicht, teilweise geschnitten;
- Figur 13: einen Ventileinsatz im Mittellängsschnitt gesehen.

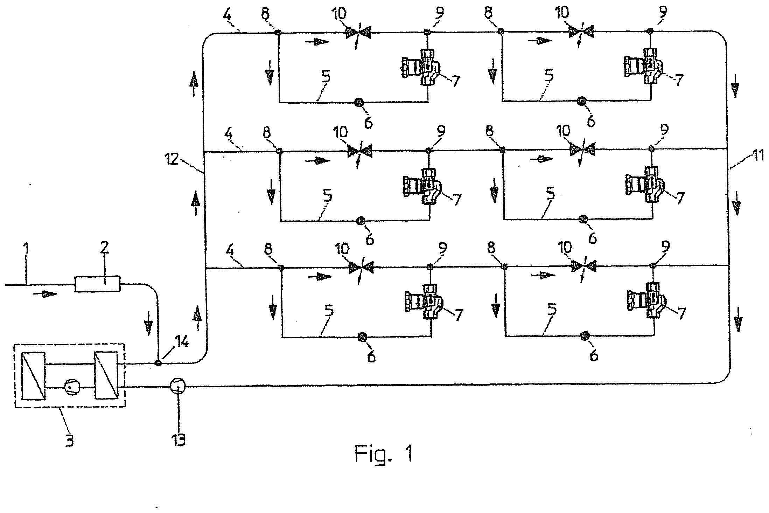

In Figur 1 ist ein erfindungsgemäßes Kaltwasserzirkulationssystem dargestellt. Hierbei wird das frische Wasser aus dem öffentlichen Trinkwassernetz über einen Anschluss 1 zugeführt und durch einen Filter 2 geleitet, welcher eventuell vorhandene Keime, wie zum Beispiel Pseudomonaden oder Legionellen, aus dem Frischwasser herausfiltert. Über eine Anschlussstelle 14 wird bei Zapfvorgängen das frische Wasser in das Zirkulationssystem geleitet. In dem Zirkulationssystem, welches nachfolgend noch beschrieben wird, wird die Zirkulation durch eine Zirkulationspumpe 13 aufrechterhalten. Das im Zirkulationskreis umlaufende Wasser wird durch eine Kühleinrichtung geleitet, welche das Wasser kühlt, vorzugsweise auf Temperaturen von unter 9 ° C, und so eine hygienisch vorteilhafte Temperatur im System sicherstellt. Das gekühlte Wasser wird in Pfeilrichtung durch das System geführt und dabei zunächst über den Steigstrang 12 auf die einzelnen Etagenstränge 4 verteilt. An die einzelnen Etagenstränge 4 sind über Abgänge 8 und Einmündungen 9 Ringleitungen 5 angeschlossen. Der Strömungsweg ist in den Ringleitungen 5 durch daneben befindliche Pfeile angegeben. In dieser Strömungsrichtung sind in den Ringleitungen 5 Verbraucher 6, wie zum Beispiel Dusche, Zapfstelle oder dergleichen vorgesehen sowie ein geregeltes Strangregulierventil 7. Das Strangregulierventil ist in der Ringleitung 5 dem letzten Verbraucher 6 nachgeschaltet. Es kann auch in eine Einbindearmatur integriert sein, die im Bereich der Einmündung 9 anzuordnen ist.

Das geregelte Strangregulierventil 7 lässt sich auf eine Solltemperatur einstellen, bei deren Überschreitung das geregelte Strangregulierventil 7, zum Beispiel mit Hilfe eines Thermofühlers, geöffnet wird, und bei deren Unterschreitung das Strangregulierventil 7 bis auf einen Restdurchfluss geschlossen wird. Dieser Restdurchfluss im geregelten Strangregulierventil 7 umspült den Thermofühler ständig und kann so die aktuelle Temperatur des Wassers in der Ringleitung 5 erfassen. Es ist dabei vorteilhaft, zwischen dem Abgang 8 und der Einmündung 9 der Ringleitung in den Etagenstrang 4 eine Drossel 10, beispielsweise ein statisches Regulier-Ventil mit einer Drosselfunktion, zu installieren, um eine hydraulischen Abgleich zwischen der Ringleitung 5 und dem Etagenstrang 4 zu schaffen und somit den Restdurchfluss in dem geregelten Strangregulierventil 7 zu gewährleisten.

Steigt die Temperatur in einer der Ringleitungen 5 über den am jeweiligen Strangregulierventil 7 eingestellten Wert, so wird der Durchgang durch das Strangregulierventil voll geöffnet und der Widerstand im Leitungssystem sinkt deutlich unter den Widerstand der einstellbaren Drossel 10. Dies führt dazu, dass der volle Zirkulationsstrom durch die Ringleitung 5 geführt wird, bis die gewünschte Wassertemperatur wieder in der Ringleitung 5 vorliegt, so dass das Strangregulierventil 7 sich in die Stellung mit minimalem Durchlass einstellt. Auf diese Weise wird erreicht, dass nur die Ringleitung 5 durchströmt wird, bei der die zulässige Solltemperatur überschritten wird, und dann mit dem maximalen Volumenstrom, so dass ein schneller Austausch mit frischem Wasser erfolgt.

In der Zeichnungsfigur ist rechts der Rücklaufstrang 11 gezeigt.

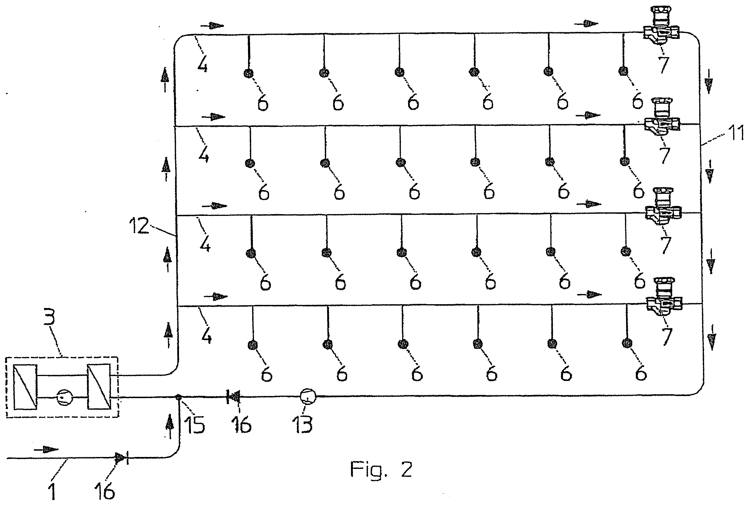

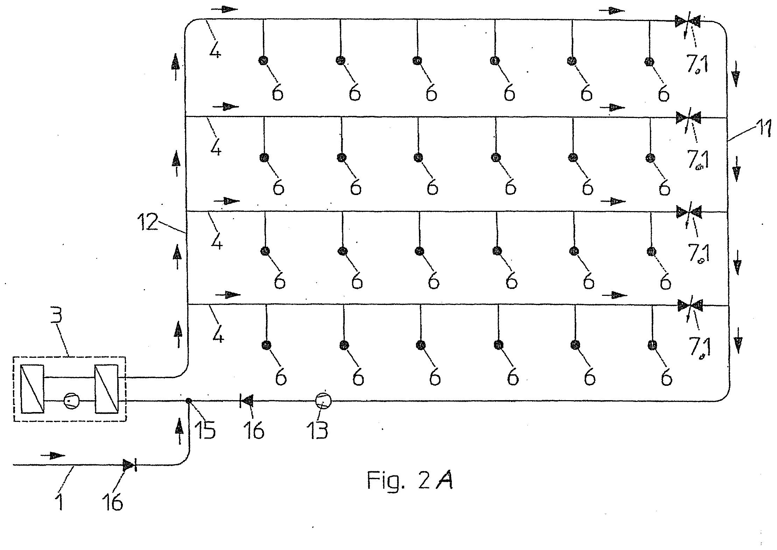

Die Figur 2, 2A zeigt eine weitere Ausführungsform eines Kaltwasserzirkulationssystems gemäß der Erfindung. In diesem Falle wird das Frischwasser aus dem öffentlichen Trinkwasserversorgungsnetz über den Anschluss 1 dem Zirkulationssystem in Strömungsrichtung vor der Kühleinrichtung 3 über eine Einmündung 15 zugeführt, so dass das zugeführte Frischwasser sofort gekühlt wird, was besonders vorteilhaft ist, wenn das Frischwasser zum Beispiel im Sommer eine erhöhte Temperatur hat. Die Zirkulation des Kaltwassers wird wiederum durch eine Zirkulationspumpe 13 sichergestellt. Über einen Steigstrang 12 werden mehrere Etagenstränge 4 versorgt, an welche jeweils mehrere Verbraucher 6 angeschlossen sind. An jedem in Strömungsrichtung hinter den angeschlossenen Verbrauchern 6 liegenden Ende der Etagenstränge 4 ist ein geregeltes Strangregulierventil 7,7.1 angeordnet. Wie bereits bezüglich Figur 1 beschrieben, hat dieses geregelte Strangregulierventil 7,7.1 unterhalb einer einstellbaren Temperatur einen Restvolumenstrom für die Ermittlung der aktuellen Temperatur des Wassers im entsprechenden Etagenstrang 4 durch den Thermofühler des Strangregulierventiles 7,7.1. Wird die eingestellte Temperatur überschritten, öffnet das geregelte Strangregulierventil 7,7.1 und der entsprechende Etagenstrang 4 wird vom maximalen Zirkulationsvolumen durchströmt. Somit ist ein schneller und gezielter Austausch des Wassers in dem entsprechenden Etagenstrang möglich. Über den Rücklaufstrang 11, der als Sammelstrang dient, wird das Wasser aus den Etagensträngen 4 wieder dem Kühlaggregat 3 zugeführt.

Dabei verhindert ein Rückflussverhinderer 16 unten im Rücklaufstrang und ein Rückflussverhinderer 16 in der Zulaufleitung des Frischwassers (Anschluss 1) bei fehlender Wassserabnahme ein Rückdrücken des Zirkulationswassers durch die Zirkulationspumpe 13 in das öffentliche Trinkwasserversorgungsnetz. Zudem verhindert der Rückflussverhinderer 16 zwischen dem Einmündungspunkt 15 und der Zirkulationspumpe 13, dass das Wasser aufgrund des durch einen Zapfvorgang entstehenden Druckabfalles entstehenden Differenzdruck entgegen der Zirkulationsrichtung strömen kann.

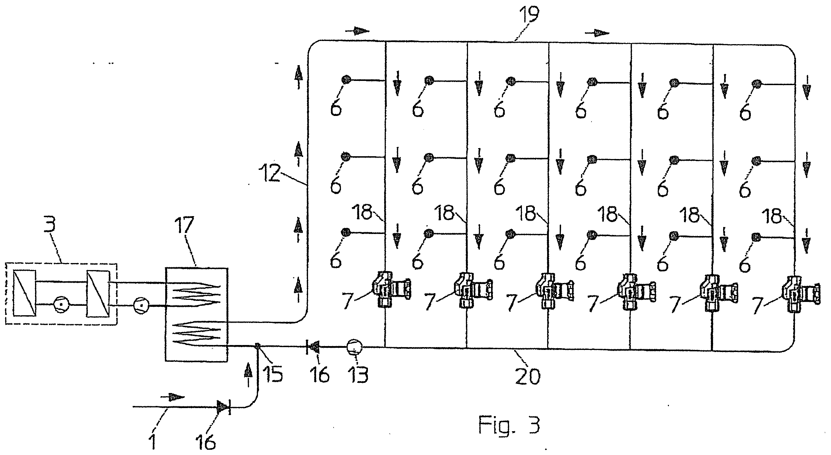

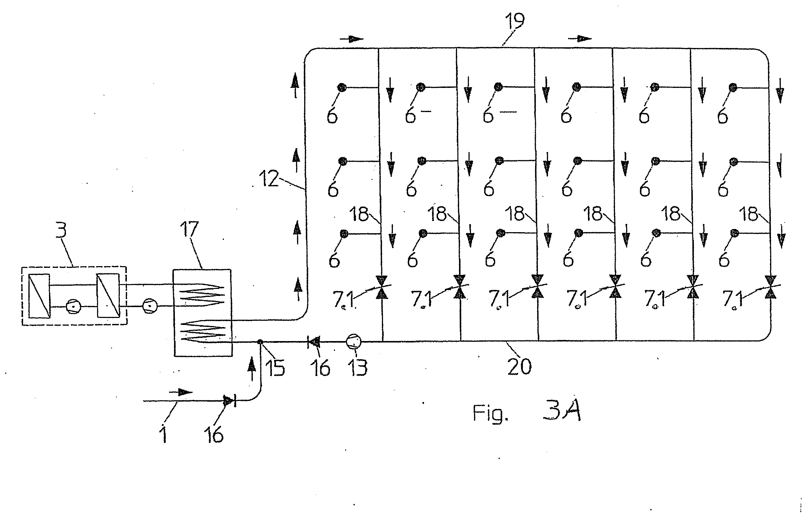

In Figur 3, 3A schließlich ist eine weitere Ausführungsform eines Kaltwasserzirkulationssystems dargestellt. Wie bereits in Figur 2 gezeigt, wird das Frischwasser über den Anschluss 1 über eine Einmündung 15 vor einer Kühleinrichtung 3 in das Zirkulationssystem eingeleitet. Die Kühleinrichtung 3 besteht bei dieser Ausführung aus einem Kühlaggregat (Bezugszeichen 3) zur Kälteerzeugung, vorzugsweise zum Beispiel eine Wärmepumpe und einem damit kommunizierenden Kältespeicher 17, in welchem die produzierte Kälte gespeichert wird. Das Trinkwasser des Zirkulationssystems ist durch diesen Kältespeicher 17 geführt. Hiermit lässt sich ein unzulässiger Temperaturanstieg bei großen Wasserverbräuchen verhindern. Bei geringem oder keinem Wasserverbrauch (zum Beispiel in der Nacht) kann dann der Speicher durch das Kühlaggregat (3) wieder auf das erforderliche Temperaturniveau heruntergekühlt werden. Die Zirkulation des Wassers wird wiederum durch die Zirkulationspumpe 13 aufrechterhalten, durch den Kältespeicher 17 geleitet und über den Steigstrang 12 zu dem oberen Verteilstrang 19 geleitet, welcher das Wasser auf einen oder mehrere Stockwerksstränge 18 verteilt. In diesen Stockwerkssträngen 18 sind wiederum mehrere Verbraucher 6 angeordnet, wobei im in Strömungsrichtung am Ende des Stockwerksstranges 18 befindlichen Bereich ein geregeltes Strangregulierventil 7, 7.1 in den Kreis eingeschaltet ist. Die Funktion dieses Strangregulierventils 7, 7.1 ist die gleiche, wie bei den anderen Ausführungsformen beschrieben, das heißt, unterhalb einer einstellbaren Temperatur lässt das geregelte Strangregulierventil 7,7.1 nur einen Restvolumenstrom zu. Wird die eingestellte Temperatur überschritten, wird der volle Durchfluss freigegeben und das Wasser des entsprechenden Stranges 18 in den Sammelstrang 20 geleitet, welches das Wasser der Kühleinrichtung 3 zuführt.

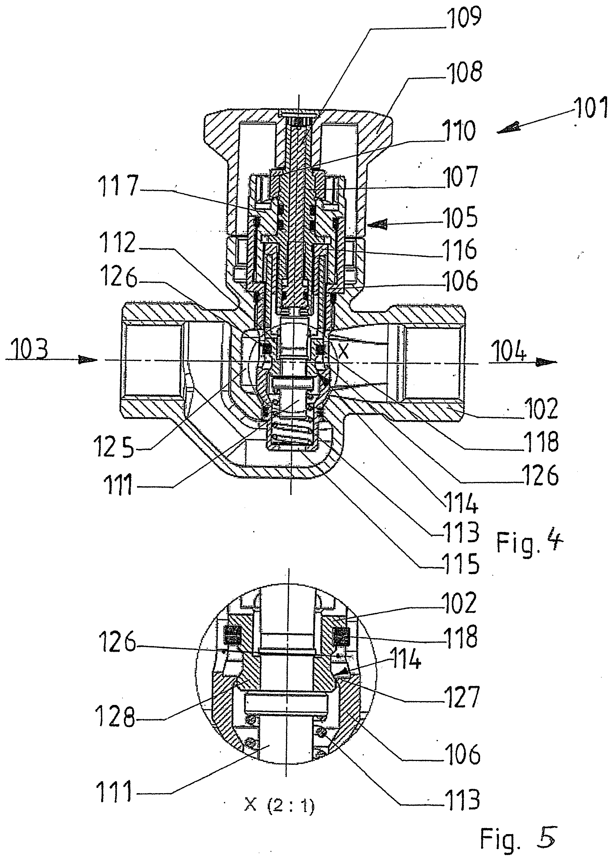

In Figur 4 ist ein temperaturgesteuertes Ventil 101, insbesondere Regulierventil, in einer Ausführungsform als Durchgangsventil gezeigt. Dabei ist ein Ventileinsatz 105 in ein Gehäuse 102 eingesetzt, welches einen Einlass 103 und einen Auslass 104 aufweist. Der Ventileinsatz 105 ist mit seinem unteren Ende in eine Kammer 125 des Gehäuses 102 eingesetzt. Das durchströmende Medium kann durch eine Bodenöffnung 115 einer Hülse 106 des Ventileinsatzes 105 einströmen und über radiale Öffnungen 126 der Hülse 106 abströmen und über den Auslass 104 abfließen. In der Hülse 106 des Ventileinsatzes 105 ist eine in den Zeichnungen oben von außen bedienbare Hauptspindel 107 gehalten. Zwischen dem innenliegenden Ende der Hauptspindel 107 und dem die Bodenöffnung 115 aufweisenden Boden der Hülse 106 ist ein Federelement 113 in Form einer Rückstellfeder angeordnet, die sich am Boden der Hülse 106 abstützt und an einem unter Temperatureinwirkung sich parallel zur Spindelachse ausdehnenden Thermoelement 111, welches sich wiederum am innenliegenden Spindelende abstützt. Das Thermoelement 111 ist mit einem Regelstück 112 zwangsgekoppelt, also vorzugsweise verbunden, welches mit seiner Außenumfangskontur 128 und einer im Inneren der Hülse 106 ausgebildeten Kontur 127 einen Strömungsspalt 114 bildet, über den das durchströmende Fluid zu den radialen Öffnungen 126 der Hülse 106 und folgend zum Auslass 104 strömen kann.

Das durchströmende Medium strömt durch die in Längsachse des Ventileinsatzes 105 liegende Bodenöffnung 115 und umspült das direkt im Volumenstrom befindliche Thermoelement 111. Dieses stützt sich an einer koaxial zur Hauptspindel 107 vorgesehenen weiteren Spindel 109 zur Temperatureinstellung ab.

In der Darstellung gemäß Figur 4 und 5 ist das Ventil 101 im Zustand "Restdurchfluss" gezeigt, das heißt, die Temperatur des durchströmenden Mediums ist kleiner oder gleich der fest eingestellten Solltemperatur oder der mit der Spindel 109 zur Temperatureinstellung eingestellten Solltemperatur. In dieser Stellung hat also der Strömungsspalt 114 seine kleinste Ausprägung. Der Volumenstrom ist nur so groß, dass das Thermoelement 111 ausreichend umspült wird, um die aktuelle Mediumtemperatur zu fühlen.

In Figur 5 ist ein Detailausschnitt in vergrößertem Maßstab gezeigt, der den Strömungsspalt 114 verdeutlicht.

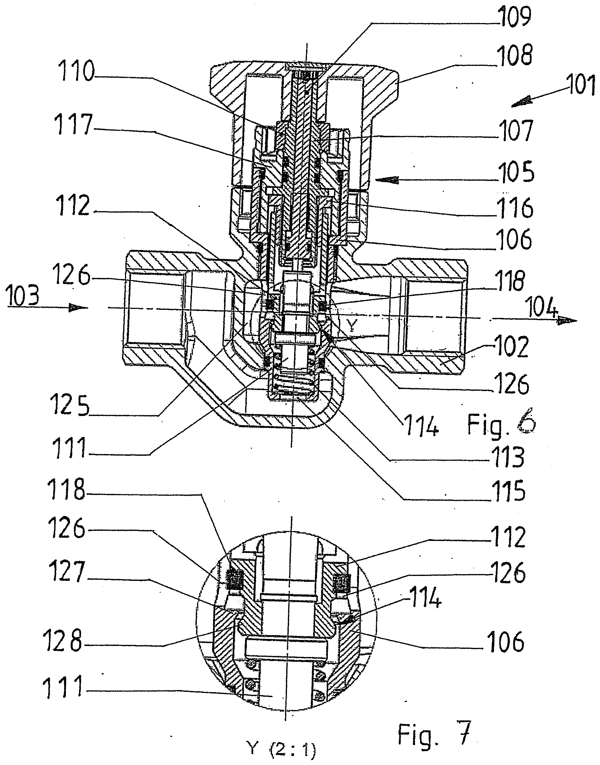

In Figur 6 ist das temperaturgesteuerte Regulierventil 101 im geöffneten Zustand dargestellt, das heißt, die Temperatur des durchströmenden Mediums ist größer als die fest eingestellte oder mittels der Temperatur Einstellspindel 109 eingestellte Solltemperatur. Aufgrund der höheren Temperatur des das Thermoelement 111 umströmende Mediums, dehnt sich dieses aus beziehungsweise dessen Ausdehnungselement und zwar in Richtung parallel zur Spindelachse. Die Stirnfläche der Hauptspindel 107 oder im Ausführungsbeispiel der Spindel 109 dient dem sich ausdehnenden Thermoelement 111 als fester Anschlag, so dass der Hub des Thermoelementes 111 von der Rückstellfeder 113 aufgenommen wird und somit axial in Richtung der Bodenöffnung 115 der Hülse 106 des Ventileinsatzes 105 erfolgt. Das mit dem Thermoelement 111 verbundene Regelstück 112 folgt zwangsläufig diesem axialen Hub, wodurch sich der Regelspalt 114 aufgrund der Verschiebung der Kontur 128 des Regelstückes 112 gegenüber der Kontur 127 der Hülse 106 vergrößert. Diese Vergrößerung des Strömungsspaltes 114 hat eine Vergrößerung des Volumenstroms zur Folge.

In Figur 7 ist das entsprechende Detail der Figur 6 im vergrößerten Maßstab gezeigt.

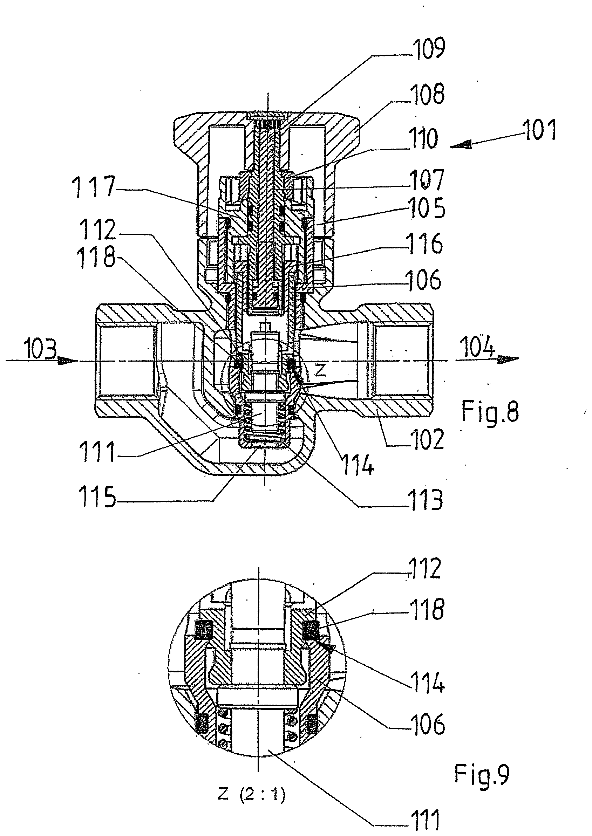

In Figur 8 und 9 ist eine weitere Besonderheit gezeigt. Hierbei ist in Figur 8 das Regulierventil in einem geschlossenem Zustand gezeigt. Durch Drehen eines auf der Hauptspindel 107 oben aufgesetzten Handrades 108 wird die in einer Kopfhülse 117 verdrehsicher gelagerte Mitnehmerhülse 116 mit Hilfe eines Bewegungsgewindes auf der Hauptspindel 107 axial verschoben. Beim Schließen des Ventils 101 erfolgt eine axiale Bewegung der Mitnehmerhülse 116 in Richtung der Bodenöffnung 115 der Hülse 106 des Ventileinsatzes 105, wobei das an der Mitnehmerhülse 116 gelagerte Regulierstück 112 in gleicher Richtung mitsamt dem Thermoelement 111 gegen die Kraft der Rückstellfeder 113 mitgenommen wird. Die Verschiebung erfolgt soweit, bis ein Dichtring 118, welcher an dem Regulierstück 112 befestigt ist, auf den Sitz des Regelspaltes 114 aufsetzt und damit den Volumenstrom absperrt.

Das entsprechende Detail ist im vergrößertem Maßstab in Figur 9 gezeigt.

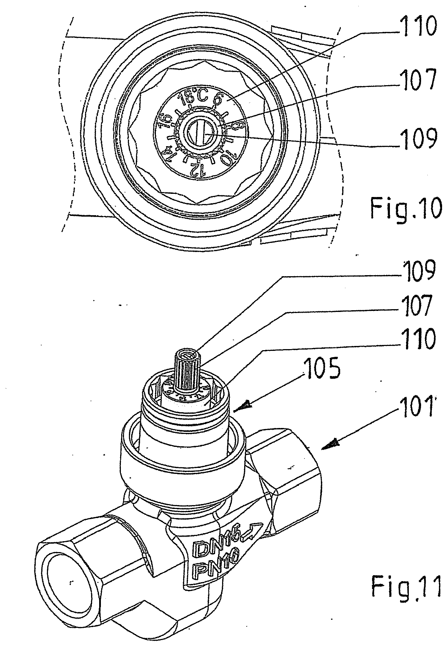

In Figur 10 und 11 ist gezeigt, wie die Einstellung der Temperatur erfolgen kann. Die Einstellung erfolgt mit der koaxial zur Hauptspindel 107 vorgesehenen Temperatureinstellspindel 109, welcher an ihrer oben außen liegenden Stirnseite eine Markierung aufweist. An der Hauptspindel 107 ist oben ein Skalenring 110 mit einem entsprechenden Temperaturbereich angebracht. Durch Drehen der Temperatureinstellspindel 109 relativ zur Hauptspindel 107 lässt sich die Markierung der Temperatureinstellspindel 109 auf eine bestimmte Temperatur auf dem Skalenring 110 einstellen. Die Drehbewegung der Temperatureinstellspindel 109 wird durch ein Gewinde in eine axiale Bewegung relativ zur Hauptspindel 107 gewandelt. Durch die axiale Bewegung der Temperatureinstellspindel 109 wird die Hublage des an der inneren des Ventils 101 liegenden Stirnseite der Temperatureinstellspindel 109 anliegenden Thermoelementes 111 entsprechend der Einstellung verschoben.

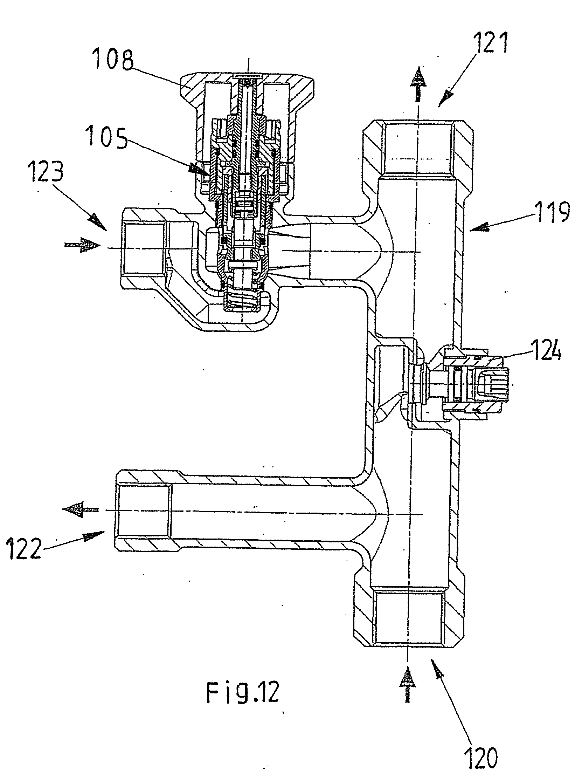

In Figur 12 ist eine Variante gezeigt. Hierbei ist eine Anschlussarmatur 119 für Ringleitungen vorgesehen. Ein Einlassanschluss 120 und ein Auslassanschluss 121 binden die Anschlussarmatur 119 in den Strang eines Trinkwassersystems ein. In Strömungsrichtung des Mediums, verdeutlicht durch Pfeile, dem Einlassanschluss 120 folgend zweigt ein Auslassanschluss 122 zu einer Ringleitung mit einem oder mehreren Verbrauchern ab. Im Anschluss an die Verbraucher wird die Ringleitung über den Einlassanschluss 123 an die Anschlussarmatur 119 angeschlossen. Dem Einlassanschluss 123 von der Ringleitung folgend ist der Ventileinsatz 105 angeordnet. Das Gehäuse der Anschlussarmatur bildet also die Aufnahme für den Ventileinsatz 105 und die entsprechende Zufluss- und Abflussmöglichkeit.

Durch den entsprechenden Ventileinsatz 105 wird der Volumenstrom auf einen Restdurchfluss reduziert, so lange die Temperatur des durchfließenden Mediums unter der am Ventileinsatz 105 eingestellten Temperatur liegt. In Strömungsrichtung dem Ventileinsatz 105 folgend mündet der Anschluss wieder in das Gehäuse der Anschlussarmatur 119. In der im Ausführungsbeispiel geraden Verbindung zwischen den Anschlüssen 120 und 121 und den Abzweigungen zur und von der Ringleitung 122 und 123 kann ein hydraulischer Widerstand, beispielsweise im Ausführungsbeispiel ein Drosselventil 124 eingebaut werden. Der Einbau solcher Anschlussarmaturen 119 in das KaltwasserZirkulationssystem ermöglicht den hydraulischen Abgleich von Strömungswiderständen in unterschiedlichen Anlageteilen. Die Zeichnungsfigur stellt nur eine prinzipielle Anordnung solcher Komponenten dar.

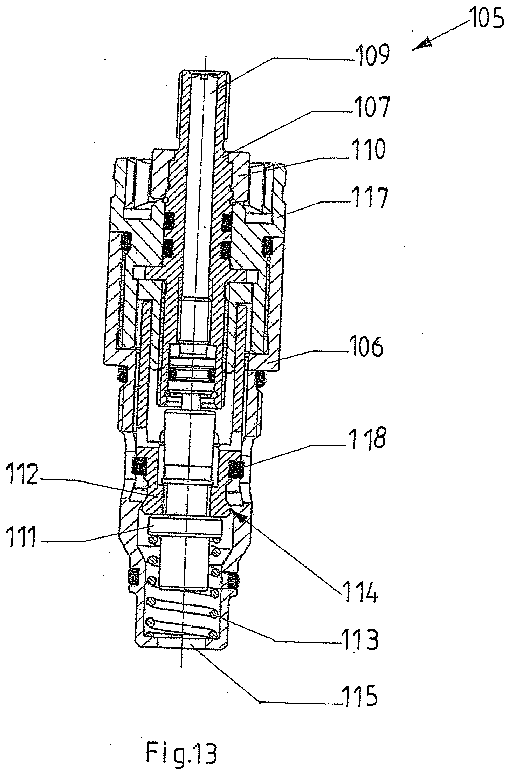

In Figur 13 schließlich ist ein entsprechender Ventileinsatz 105 wie er in dem Durchgangsventil gemäß Figur 4 oder in der Anschlussarmatur 119 gemäß Figur 12 verwendet wird, gezeigt.

## Patentansprüche

1. Temperaturgesteuertes Ventil (101) zum Einsatz in Kaltwassertrink- oder Kaltbrauchwasser-Systemen, wobei das Ventil (101) in Abhängigkeit von einer einstellbaren oder auch fest eingestellten Temperatur bei dieser gegenüber höherer Temperatur des durch das Ventil (101) strömenden Mediums für den Durchfluss bis zu einem maximalen Volumenstrom geöffnet ist und bei niedrigerer Temperatur oder auf dieser Temperatur befindlichem des durch das Ventil (101) strömenden Mediums für den Durchfluss bis auf einen Restvolumenstrom geschlossen ist, **dadurch gekennzeichnet, dass** das Ventil (101) ein den Durchfluss bestimmendes Regelstück (112) aufweist, welches durch ein die Temperatur des durchströmenden Mediums erfassendes Stellglied unmittelbar oder über einen damit gekoppelten Antrieb in die beiden Extremlagen steuerbar oder einstellbar ist,
- dass das Stellglied ein im durchströmenden Medium angeordnetes Thermoelement (111) mit Ausdehnungselement nach Art eines Stößels ist,
- dass das Ventil (101) ein Gehäuse (102) mit einem Einlass (103) und einem Auslass (104) für das durchströmende Medium aufweist, oder das Ventil (101) im Gehäuse einer Anschlussarmatur (119) mit Einlassanschluss (120) und Auslassanschluss (123) aufgenommen ist, mit der eine Ringleitung an eine Hauptversorgungsleitung angeschlossen ist und das Ventil (101) in die von der Hauptversorgungsleitung abgezweigte Ringleitung eingebaut ist und dass das Ventil (101) mit einem Regelelement derart gekoppelt ist, dass bei für maximalen Volumenstrom geöffnetem Ventil die Hauptversorgungsleitung derart abgesperrt ist, dass der Volumenstrom der Hauptversorgungsleitung die Ringleitung durchströmt, wobei nach Erreichen der Solltemperatur das Ventil (101) wieder auf einen Restdurchfluss reduziert und die Hauptversorgungsleitung wieder freigegeben ist und
- dass das Ventil (101) das Gehäuse (102) mit dem Fluid-Einlass (103) und dem Fluid-Auslass (104) sowie eine mit diesen in Verbindung stehenden Kammer (125) aufweist, in die ein Ventileinsatz (105) eingesetzt ist, der mit dem Einlass (103) und dem Auslass (104) in Verbindung steht, wobei der Ventileinsatz (105) eine Hülse (106) aufweist, in der eine von außen bedienbare Hauptspindel (107) gehalten ist und die eine Bodenöffnung (115) aufweist, die zum Einlass (103) offen ist, sowie radiale Öffnungen (126) die zum Auslass (104) offen sind, wobei zwischen dem innenliegenden Ende der Hauptspindel (107) und dem die Bodenöffnung (115) aufweisenden Boden der Hülse (106) ein Federelement (113) angeordnet ist, das sich am Boden abstützt und an einem unter Temperatureinwirkung sich parallel zur Spindelachse ausdehnenden Thermoelement (111), das sich am innenliegenden Spindelende abstützt, wobei das Thermoelement (111) mit dem Regelstück (112) zwangsgekoppelt ist, welches mit seiner Außenumfangskontur (128) und einer im Inneren der Hülse (106) ausgebildeten Kontur (127) einen Strömungsspalt (114) bildet, über den das einströmende Fluid zu den radialen Öffnungen (126) der Hülse (106) und folgend zum Auslass (104) strömt.

2. Trink- oder Brauchwassersystem mit temperaturgesteuerten Ventilen (101) nach Anspruch 1 und mit einem Leitungssystem, das einen Anschluss (1) an ein öffentliches Wasserversorgungsnetz aufweist, sowie mindestens einen Vorlaufstrang oder Steigstrang (12) mit mindestens einem davon abzweigenden Stockwerksstrang (4,18) und/oder mindestens einer in Durchströmrichtung des Wassers vom Steigstrang (12) und/oder vom Stockwerksstrang (4,18) abgezweigten Ringleitung (5), sowie mindestens einem am Steigstrang (12) und/oder am Stockwerksstrang (4,18) und/oder in der Ringleitung (5) angeschlossenen Verbraucher (6) sowie einem Rücklaufstrang (11,20), in den der Vorlaufsstrang und/oder der Steigstrang (12) und/oder der Stockwerksstrang (4,18) und/oder die Ringleitung (5) mündet, wobei das Leitungssystem aus Vorlaufstrang oder Steigstrang (12) und Rücklaufstrang (11,20) einen geschlossenen Zirkulationsstrang bildet, und dass in diesen Zirkulationsstrang eine Einrichtung (3) zur Kühlung des durchströmenden Wassers integriert ist, mittels derer das Trink- oder Brauchwasser auf eine vorbestimmte Temperatur kühlbar ist oder gekühlt wird, wobei in eine oder jede Ringleitung (5) mit wenigstens einem Verbraucher (6) ein geregeltes Strangregulierventil (7,7.1) eingeschaltet ist, welches in Abhängigkeit von einer einstellbaren Temperatur bei oberhalb eines Sollwertes liegender Temperatur des die Ringleitung (5) durchströmenden Wassers den Durchfluss bis zu einem maximalen Wert öffnet und bei darunter liegender Temperatur den Durchfluss auf einen minimalen Wert begrenzt, wobei das Strangregulierventil (7,7.1) vorzugsweise innerhalb der Ringleitung (5) deren in Strömungsrichtung letztem Verbraucher (6) nachgeschaltet ist oder in eine Einbindearmatur zwischen Ringleitung (5) und Hauptleitung des Leitungssystems integriert ist, oder mindestens in einen oder jeden Stockwerksstrang (4,18) mit mindestens einem Verbraucher (6) ein geregeltes Strangregulierventil (7,7.1) eingeschaltet ist, welches in Abhängigkeit von einer einstellbaren Temperatur bei oberhalb eines Sollwertes liegender Temperatur des den Strang durchströmenden Wassers den Durchfluss bis zu einem maximalen Wert öffnet und bei darunter liegender Temperatur den Durchfluss auf einen minimalen Wert begrenzt, wobei das Strangregulierventil (7,7.1) in den Stockwerksstrang (4,18) dem darin integrierten in Strömungsrichtung des Wassers letzten Verbraucher (6) nachgeschaltet ist oder in eine Einbindearmatur zwischen Stockwerksstrang (4,18) und Hauptleitung des Leitungssystems integriert ist, oder mindestens in einen Steigstrang (12) mit mindestens einem Verbraucher (6) ein geregeltes Strangregulierventil (7,7.1) eingeschaltet ist, welches in Abhängigkeit von einer einstellbaren Temperatur bei oberhalb eines Sollwertes liegender Temperatur des den Strang durchströmenden Wasser den Durchfluss bis zu einem maximalen Wert öffnet und bei darunter liegender Temperatur den Durchfluss auf einen minimalen Wert begrenzt, wobei das Strangregulierventil (7,7.1) dem in Strömungsrichtung letzten Verbraucher (6) nachgeschaltet ist.

3. Trink- oder Brauchwassersystem nach Anspruch 2, **dadurch gekennzeichnet, dass** der Anschluss (1) an das Wasserversorgungsnetz zwischen den Ausgang der Kühleinrichtung (3) und den Vorlauf- oder Steigstrang (12) geschaltet ist.

4. Trink- oder Brauchwassersystem nach Anspruch 2, **dadurch gekennzeichnet, dass** der Anschluss (1) an das Wasserversorgungsnetz in Strömungsrichtung vor den Eingang der Kühleinrichtung (3) in die Ringleitung eingeschaltet ist.

5. Trink- oder Brauchwassersystem nach einem der Ansprüche 2 bis 4, **dadurch gekennzeichnet, dass** in die Stockwerksstränge, die parallel zu den Ringleitungen (5) geschaltet sind, statische Strangregulierventile (10) für einen hydraulischen Abgleich der Leitungen untereinander installiert sind.

6. Trink- oder Brauchwassersystem nach einem der Ansprüche 2 bis 4, **dadurch gekennzeichnet, dass** mindestens in einem oder jedem Stockwerksstrang (4,18) mit mindestens einem Verbraucher (6) ein statisches Strangregulierventil (10) für einen hydraulischen Abgleich der Leitungen untereinander installiert ist, wobei das Strangregulierventil (10) in den Stockwerksstrang (4,18) dem darin integrierten in Strömungsrichtung des Wassers letzten Verbraucher nachgeschaltet ist oder in eine Einbindearmatur zwischen Stockwerksstrang (4,18) und Hauptleitung des Leitungssystems integriert ist.

7. Trink- oder Brauchwassersystem nach einem der Ansprüche 2 bis 4, **dadurch gekennzeichnet, dass** mindestens in einem oder jedem Steigstrang (12) mit mindestens einem Verbraucher (6) ein statisches Strangregulierventil (10) für einen hydraulischen Abgleich der Leitungen untereinander installiert ist, wobei das Strangregulierventil (10) vorzugsweise in dem Steigstrang (12) dem darin integrierten in Strömungsrichtung des Wassers letzten Verbraucher nachgeschaltet ist oder in eine Einbindearmatur zwischen Steigstrang (12) und Hauptleitung des Leitungssystems integriert ist.

8. Trink- oder Brauchwassersystem nach einem der Ansprüche 2 bis 7, **dadurch gekennzeichnet, dass** das Strangregulierventil (7,7.1) durch einen Temperaturmessfühler oder ein eine Temperatur erfassendes Stellglied gesteuert ist, welcher oder welches im Strömungsweg des Wassers durch das Strangregulierventil (7,7.1) angeordnet ist.

9. Trink- oder Brauchwassersystem nach einem der Ansprüche 2 bis 8, **dadurch gekennzeichnet, dass** zwischen den Anschluss (1) an das öffentliche Wasserversorgungsnetz und das Leitungssystem ein Filter (2) zur Herausfilterung von Keimen installiert ist.

10. Trink- oder Brauchwassersystem nach einem der Ansprüche 2 bis 9, **dadurch gekennzeichnet, dass** in dem Zirkulationsstrang eine Zirkulationspumpe (13) installiert ist.

11. Ventil nach Anspruch 1, **dadurch gekennzeichnet, dass** das Ventil (101) ein Zirkulationsventil ist.

12. Ventil nach Anspruch 1, **dadurch gekennzeichnet, dass** das Ventil (101) ein Strangregulierventil (7,7.1) ist.

13. Ventil nach Anspruch 1, **dadurch gekennzeichnet, dass** das Federelement (113) eine Schraubenfeder ist.

## Claims

1. A temperature-controlled valve (101) for use in cold drinking water or cold domestic water systems, the valve (101), depending on an adjustable or fixed temperature with respect to a higher temperature of the medium flowing through the valve (101), being opened for the flow up to a maximum flow rate and with respect to a lower temperature or for a medium flowing through the valve (101) being at this temperature being closed for the flow except for a residual flow rate, **characterized by that** the valve (101) includes a control element (112) determining the flow which is controllable or adjustable directly or by a drive coupled thereto into the two extreme positions by an actuator detecting the temperature of the flowing medium,
that the actuator is a thermocouple (111) disposed in the flowing medium and including an expansion element such as a plunger,
that the valve (101) includes a housing (102) with an inlet (103) and an outlet (104) for the flowing medium, or
that the valve (101) is received in the housing of a connecting fitting (119) with an inlet port (120) and an outlet port (123), by means of which an annular line is coupled to a main supply line, and
that the valve (101) is fitted in the annular line branched from the main supply line and that the valve (101) is coupled to a control element such that for a valve opened for a maximum flow rate, the main supply line is blocked such that the volumetric flow of the main supply line flows through the annular line, after reaching the desired temperature the valve (101) being reduced again to a residual flow and the main supply line being opened again, and
that the valve (101) includes the housing (102) with the fluid inlet (103) and the fluid outlet (104) and a chamber (125) being in communication therewith, into which a valve cartridge (105) is inserted that is in communication with the inlet (103) and the outlet (104), the valve cartridge (105) including a sleeve (106), in which is held a main spindle (107) operable from outside and which includes a bottom opening (115) that is open toward the inlet (103), as well as radial openings (126) that are open toward to the outlet (104), between the inner end of the main spindle (107) and the bottom of the sleeve (106) including the bottom opening (115) a spring element (113) being provided that is supported at the bottom and at a thermocouple (111) supported at the inner spindle end and expanding under temperature influence in parallel to the spindle axis, the thermocouple (111) being positively coupled to a control element (112) forming with its exterior contour (128) and a contour (127) provided within the sleeve (106) a flow gap (114), through which the inflowing fluid flows to the radial openings (126) of the sleeve (106) and then to the outlet (104).

2. A drinking or domestic water system comprising temperature-controlled valves (101) according to claim 1 and comprising a line system that includes a connection (1) to a public water supply network and at least one forward-flow line or riser (12) with at least one floor line (4, 18) branching therefrom and/or at least one annular line (5) branching, in the flow direction of the water, from the riser (12) and/or from the floor line (4, 18), and at least one consumer (6) connected at the riser (12) and/or at the floor line (4, 18) and/or in the annular line (5) and a return line (11, 20), into which the forward-flow line and/or the riser (12) and/or the floor line (4, 18) and/or the annular line (5) opens out, the line system of forward-flow line or riser (12) and return line (11, 20) forming a closed circulation line, and that in this circulation line a device (3) for cooling the flowing water is integrated, by means of which the drinking or domestic water can be cooled or is cooled down to a predetermined temperature, in one or each annular line (5) with at least one consumer (6) a controlled line regulation valve (7, 7.1) being connected, which, depending on an adjustable temperature, for a temperature above a design value of the water flowing through the annular line (5), opens the flow up to a maximum value, and for a lower temperature, limits the flow to a minimum value, the line regulation valve (7, 7.1) preferably being connected within the annular line (5) in the flow direction downstream of the last consumer (6) thereof or being integrated in an intermediate fitting between annular line (5) and main line of the line system, or in at least one or each floor line (4, 18) with at least one consumer (6) a controlled line regulation valve (7, 7.1) being connected, which, depending on an adjustable temperature, for a temperature above a design value of the water flowing through the line, opens the flow up to a maximum value, and for a lower temperature, limits the flow to a minimum value, the line regulation valve (7, 7.1) being connected in the floor line (4, 18) in the flow direction of the water downstream of the last consumer (6) integrated therein or being integrated in an intermediate fitting between floor line (4, 18) and main line of the line system, or in at least one riser (12) with at least one consumer (6) a controlled line regulation valve (7, 7.1) being connected, which, depending on an adjustable temperature, for a temperature above a design value of the water flowing through the line, opens the flow up to a maximum value, and for a lower temperature, limits the flow to a minimum value, the line regulation valve (7, 7.1) being connected in the flow direction of the water downstream of the last consumer (6).

3. The drinking or domestic water system according to claim 2, **characterized by that** the connection (1) to the water supply network is located between the exit of the cooling device (3) and the forward-flow line or riser (12).

4. The drinking or domestic water system according to claim 2, **characterized by that** the connection (1) to the water supply network is located in the flow direction upstream of the inlet of the cooling device (3) in the annular line.

5. The drinking or domestic water system according to one of claims 2 to 4, **characterized by that** in the floor lines that are connected in parallel to the annular lines (5), static line regulation valves (10) for a hydraulic compensation of the lines among each other are installed.

6. The drinking or domestic water system according to one of claims 2 to 4, **characterized by that** in at least one or each floor line (4, 18) with at least one consumer (6), a static line regulation valve (10) for a hydraulic compensation of the lines among each other is installed, the line regulation valve (10) being connected in the floor line (4, 18) in the flow direction of the water downstream of the last consumer integrated therein or being integrated in an intermediate fitting between floor line (4, 18) and main line of the line system.

7. The drinking or domestic water system according to one of claims 2 to 4, **characterized by that** in at least one or each riser (12) with at least one consumer (6), a static line regulation valve (10) for a hydraulic compensation of the lines among each other is installed, the line regulation valve (10) preferably being connected in the riser (12) in the flow direction of the water downstream of the last consumer integrated therein or being integrated in an intermediate fitting between riser (12) and main line of the line system.

8. The drinking or domestic water system according to one of claims 2 to 7, **characterized by that** the line regulation valve (7, 7.1) is controlled by a temperature sensor or an actuator detecting a temperature, which is disposed in the flow path of the water through the line regulation valve (7, 7.1).

9. The drinking or domestic water system according to one of claims 2 to 8, **characterized by that** between the connection (1) to the public water supply network and the line system, a filter (2) for filtering out germs is installed.

10. The drinking or domestic water system according to one of claims 2 to 9, **characterized by that** in the circulation line, a circulation pump (13) is installed.

11. The valve according to claim 1, **characterized by that** the valve (101) is a circulation valve.

12. The valve according to claim 1, **characterized by that** the valve (101) is a line regulation valve (7, 7.1).

13. The valve according to claim 1, **characterized by that** the spring element (113) is a helical spring.

## Revendications

1. Vanne régulée en température (101) pour utilisation dans des systèmes d'eau potable froide ou d'eau sanitaire froide, la vanne (101), en fonction d'une température réglable ou fixe par rapport à une température plus haute du milieu passant à travers la vanne (101), étant ouverte pour le débit jusqu'à un débit volumique maximal et par rapport à une température plus basse ou pour un milieu passant à travers la vanne (101) se trouvant à cette température étant fermée pour le débit à l'exception d'un débit volumique résiduel, **caractérisée en ce que** la vanne (101) comporte un élément de régulation (112) déterminant le débit qui est commandable ou réglable directement ou par un entraînement couplé à celui-ci dans les deux positions extrêmes par un actionneur détectant la température du milieu passant,
**que** l'actionneur est un couple thermoélectrique (111) disposé dans le milieu passant comportant un élément extenseur comme p.ex. un poussoir,
**que** la vanne (101) comporte un boîtier (102) avec une entrée (103) et une sortie (104) pour le milieu passant, ou
**que** la vanne (101) est reçue dans le boîtier d'une armature de raccordement (119) avec une orifice d'entrée (120) et une orifice de sortie (123), au moyen desquelles une conduite annulaire est couplée à une conduite d'alimentation principale, et
**que** la vanne (101) est incorporée dans la conduite annulaire dérivée de la conduite d'alimentation principale et que la vanne (101) est couplée à un élément de régulation, de façon que pour une vanne ouverte pour débit volumique maximal, la conduite d'alimentation principale soit bloquée, de façon que le débit volumique de la conduite d'alimentation principale passe à travers la conduite annulaire, après obtention de la température de consigne la vanne (101) étant réduite de nouveau à un débit résiduel et la conduite d'alimentation principale étant ouverte de nouveau, et
**que** la vanne (101) comporte le boîtier (102) avec l'entrée de fluide (103) et la sortie de fluide (104) et une chambre (125) étant en communication avec celles-ci, dans laquelle un boisseau (105) est inséré qui est en communication avec l'entrée (103) et la sortie (104), le boisseau (105) comportant une douille (106), dans laquelle est maintenu un tirant principal (107) manoeuvrable de l'extérieur et qui comporte une ouverture de fond (115) qui est ouverte vers l'entrée (103), aussi bien que des ouvertures radiales (126) qui sont ouvertes vers la sortie (104), entre l'extrémité intérieure du tirant principal (107) et le fond de la douille (106) comportant l'ouverture de fond (115) un élément de ressort (113) étant prévu qui est en appui contre le fond et contre un couple thermoélectrique (111) qui est en appui contre l'extrémité intérieure du boisseau et s'allonge sous influence de la température en parallèle à l'axe du boisseau, le couple thermoélectrique (111) étant positivement couplé à un élément de régulation (112) réalisant par son contour extérieur (128) et un contour (127) prévu au-dedans de la douille (106) une fente de débit (114), à travers laquelle le fluide entrant passe aux ouvertures radiales (126) de la douille (106) et puis à la sortie (104).

2. Système d'eau potable ou sanitaire comprenant des vannes régulées en température (101) selon la revendication 1 et comprenant un système de rames qui comporte un raccordement (1) à un réseau public de distribution d'eau et au moins une voie aller ou boucle de colonne montante (12) avec au moins une boucle d'étage (4, 18) dérivée de celle-ci et/ou au moins une conduite annulaire (5) dérivée, dans le sens d'écoulement de l'eau, de la boucle de colonne montante (12) et/ou de la boucle d'étage (4, 18), et au moins un consommateur (6) raccordé à la boucle de colonne montante (12) et/ou à la boucle d'étage (4, 18) et/ou dans la conduite annulaire (5) et une conduite de retour (11, 20), dans laquelle la voie aller et/ou la boucle de colonne montante (12) et/ou la boucle d'étage (4, 18) et/ou la conduite annulaire (5) débouche, le système de rames de voie aller ou boucle de colonne montante (12) et conduite de retour (11, 20) réalisant une voie de circulation fermée, et que dans cette voie de circulation un dispositif (3) de refroidissement de l'eau traversante est intégré, au moyen duquel l'eau potable ou sanitaire peut être refroidie ou est refroidie à une température prédéterminée, dans une ou chaque conduite annulaire (5) avec au moins un consommateur (6) une vanne de régulation réglée de la voie (7, 7.1) étant prévue, qui, en fonction d'une température réglable, à une température au-dessus d'une valeur de consigne de l'eau passant à travers la conduite annulaire (5), ouvre le débit jusqu'à une valeur maximale, et à une température plus basse, limite le débit à une valeur minimale, la vanne de régulation de la voie (7, 7.1) de préférence étant placée au-dedans de la conduite annulaire (5) dans le sens d'écoulement en aval du dernier consommateur (6) de celle-ci ou étant intégré dans une armature intermédiaire entre conduite annulaire (5) et voie principale du système de rames, ou dans au moins une ou chaque boucle d'étage (4, 18) avec au moins un consommateur (6) une vanne de régulation réglée de la voie (7, 7.1) étant prévue, qui, en fonction d'une température réglable, à une température au-dessus d'une valeur de consigne de l'eau passant à travers la voie, ouvre le débit jusqu'à une valeur maximale, et à une température plus basse, limite le débit à une valeur minimale, la vanne de régulation de la voie (7, 7.1) étant placée dans la boucle d'étage (4, 18) dans le sens d'écoulement de l'eau en aval du dernier consommateur (6) intégré là-dedans ou étant intégré dans une armature intermédiaire entre boucle d'étage (4, 18) et voie principale du système de rames, ou dans au moins une boucle de colonne montante (12) avec au moins un consommateur (6) une vanne de régulation réglée de la voie (7, 7.1) étant prévue, qui, en fonction d'une température réglable, à une température au-dessus d'une valeur de consigne de l'eau passant à travers la voie, ouvre le débit jusqu'à une valeur maximale, et à une température plus basse, limite le débit à une valeur minimale, la vanne de régulation de la voie (7, 7.1) étant placée dans le sens d'écoulement de l'eau en aval du dernier consommateur (6).

3. Système d'eau potable ou sanitaire selon la revendication 2, **caractérisé en ce que** le raccorde-ment (1) au réseau public de distribution d'eau est prévu entre la sortie du dispositif de refroidissement (3) et la voie aller ou la boucle de colonne montante (12).

4. Système d'eau potable ou sanitaire selon la revendication 2, **caractérisé en ce que** le raccordement (1) au réseau public de distribution d'eau est prévu dans le sens d'écoulement en amont de l'entrée du dispositif de refroidissement (3) dans la conduite annulaire.

5. Système d'eau potable ou sanitaire selon une des revendications 2 à 4, **caractérisé en ce que** dans les boucles d'étage qui sont raccordées en parallèle aux conduites annulaires (5), des vannes de régulation statiques (10) de la voie sont installées pour une compensation hydraulique des voies entre elles.

6. Système d'eau potable ou sanitaire selon une des revendications 2 à 4, **caractérisé en ce que** dans au moins une ou chaque boucle d'étage (4, 18) avec au moins un consommateur (6), une vanne de régulation statique (10) de la voie pour une compensation hydraulique des voies entre elles est installée, la vanne de régulation (10) de la voie étant placée dans la boucle d'étage (4, 18) dans le sens d'écoulement de l'eau en aval du dernier consommateur intégré là-dedans ou étant intégrée dans une armature intermédiaire entre boucle d'étage (4, 18) et voie principale du système de rames.

7. Système d'eau potable ou sanitaire selon une des revendications 2 à 4, **caractérisé en ce que** dans au moins une ou chaque boucle de colonne montante (12) avec au moins un consommateur (6), une vanne de régulation statique (10) pour une compensation hydraulique des voies entre elles est installée, la vanne de régulation (10) de la voie de préférence étant placée dans la boucle de colonne montante (12) dans le sens d'écoulement de l'eau en aval du dernier consommateur intégré là-dedans ou étant intégrée dans une armature intermédiaire entre boucle de colonne montante (12) et voie principale du système de rames.

8. Système d'eau potable ou sanitaire selon une des revendications 2 à 7, **caractérisé en ce que** la vanne de régulation de la voie (7, 7.1) est réglée par un capteur de température ou un actionneur détectant une température, qui est disposé dans le chemin d'écoulement de l'eau à travers la vanne de régulation de la voie (7, 7.1).

9. Système d'eau potable ou sanitaire selon une des revendications 2 à 8, **caractérisé en ce qu'**entre le raccordement (1) au réseau public de distribution d'eau et le système de rames, un filtre (2) pour filtrer des germes est installé.

10. Système d'eau potable ou sanitaire selon une des revendications 2 à 9, **caractérisé en ce que** dans la voie de circulation, une pompe de circulation (13) est installée.

11. Vanne selon la revendication 1, **caractérisé en ce que** la vanne (101) est une vanne de circulation.

12. Vanne selon la revendication 1, **caractérisé en ce que** la vanne (101) est une vanne de régulation de la voie (7, 7.1).

13. Vanne selon la revendication 1, **caractérisé en ce que** l'élément de ressort (113) est un ressort hélicoïdal.
